# EUROPEAN PATENT APPLICATION

(11) **EP 4 741 365 A1**
(43) Date of publication of application: **13.05.2026**
(21) Application number: 24839555.0
(22) Date of filing: 28.06.2024
(51) Int. Cl.: C04B 35/64, C04B 35/111, C04B 35/581, C04B 35/587

(54) **METHOD FOR PRODUCING CERAMIC SUBSTRATE**

(30) Priority: 07.07.2023 JP 2023111830
(71) Applicant: Niterra Materials Co., Ltd., Yokohama-shi, Kanagawa 235-0032 (JP)
(72) Inventor: AKIYA, Suguru, Yokohama-shi, Kanagawa 235-0032 (JP); ICHIKAWA, Hiroshi, Yokohama-shi, Kanagawa 235-0032 (JP); AKIMOTO, Toshiya, Yokohama-shi, Kanagawa 235-0032 (JP); ODA, Tatsuya, Yokohama-shi, Kanagawa 235-0032 (JP); KONDO, Hiroyasu, Yokohama-shi, Kanagawa 235-0032 (JP)
(74) Representative: Hoffmann Eitle
(86) International application number: PCT/JP2024/023616
(87) International publication number: WO 2025/013663

(57) **Abstract**

There is provided a method for producing a ceramic substrate that can appropriately set the amount of a release agent adhered to a ceramic green sheet. According to an embodiment of the invention, a method for producing a ceramic substrate includes an adhesion process of adhering a release agent to two surfaces of a ceramic green sheet having a first surface and a second surface, and a sintering process of overlaying and sintering multiple ceramic green sheets to which the release agent is adhered. In the ceramic green sheet after the adhesion process, an adhesion ratio of the release agent on the first surface and an adhesion ratio of the release agent on the second surface each are not less than 5% and not more than 30%. A difference between the adhesion ratio of the release agent on the first surface and the adhesion ratio of the release agent on the second surface is not more than 20%.

## Description

### [Technical Field]

Embodiments relate to a method for producing a ceramic substrate.

### [Background Art]

With the development in recent years of semiconductor elements requiring large currents such as power electronics, next-generation power semiconductors, and the like, the demand for ceramic substrates providing both heat dissipation and electrical insulation has been increasing year by year. In particular, as the heat generation of elements increases with downsizing and higher performance, there is a tendency to reduce the thickness of ceramic substrates to dissipate heat efficiently.

On the other hand, to lower the production cost of ceramic substrates, technology has been discussed in which ceramic substrates are produced with larger shapes (Patent Literature 1). Among ceramic substrates, silicon nitride substrates have high strength, high toughness, and good heat dissipation. According to Patent Literature 1, a silicon nitride substrate with a size of 220 mm×220 mm×0.32 mm has been obtained.

As a method for producing a ceramic substrate, technology has been discussed in which multiple green sheets are stacked with a separating material interposed (Patent Literature 2). The stacked green sheets are separated from each other after sintering. Multiple ceramic substrates are produced thereby. According to Patent Literature 2, boron nitride powder is coated as a separating material on one surface or two surfaces of the cut green sheet. Subsequently, the stacked multiple green sheets are sintered and then separated to obtain multiple silicon nitride sintered bodies.

A method of coating a release agent onto a ceramic green sheet with a roll coater also has been discussed (Patent Literature 3). According to Patent Literature 3, multiple ceramic green sheets are stacked, the upper surface and lower surface of the stacked body each are pressed with a setter made of boron nitride (BN), followed by sintering to obtain multiple ceramic sintered bodies.

### [Prior Art Documents]

### [Patent Literature]

Patent Literature 1: Japanese Patent No. 6399252
Patent Literature 2: Japanese Patent No. 5339214
Patent Literature 3: Japanese Patent No. 3369819

### [Summary of Invention]

### [Problem to be Solved by the Invention]

A green sheet of a ceramic substrate is produced by mixing an organic binder with a ceramic powder and by drying the ceramic powder and the organic binder. The green sheet does not have the strength of a resin film or a metal foil, and is easily damaged by tension. On the other hand, ceramic substrates tend to become thinner as products become smaller. Also, to reduce the cost by producing efficiently, there is a tendency to increase the size of the ceramic green sheet.

It is desirable to appropriately control the amount of the release agent adhered to the ceramic green sheet due to the effects of the amount on the quality and productivity of the ceramic substrate. For example, if the amount of the release agent is low, it becomes difficult to separate the sintered ceramic substrates from each other. Therefore, it takes time and effort to separate the ceramic substrates from each other. If the ceramic substrates cannot be separated, the ceramic substrates become defective. If much of the release agent is adhered, the separation is easier, but the cost of the release agent is increased. Also, if the adhesion amount is uneven, waviness of the ceramic substrate becomes large, which causes defects. Therefore, in the production of a ceramic substrate, it is desirable to appropriately control the amount of the release agent adhered to the ceramic green sheet.

### [Means for Solving the Problem]

A method for producing a ceramic substrate according to an embodiment includes an adhesion process and a sintering process. The adhesion process includes adhering a release agent to two surfaces of a ceramic green sheet having a first surface and a second surface. The sintering process includes overlaying and sintering multiple ceramic green sheets to which the release agent is adhered. In the ceramic green sheet after the adhesion process, an adhesion ratio of the release agent on the first surface and an adhesion ratio of the release agent on the second surface each are not less than 5% and not more than 30%. A difference between the adhesion ratio of the release agent on the first surface and the adhesion ratio of the release agent on the second surface is not more than 20%.

### [Brief Description of Drawings]

[FIG. 1]

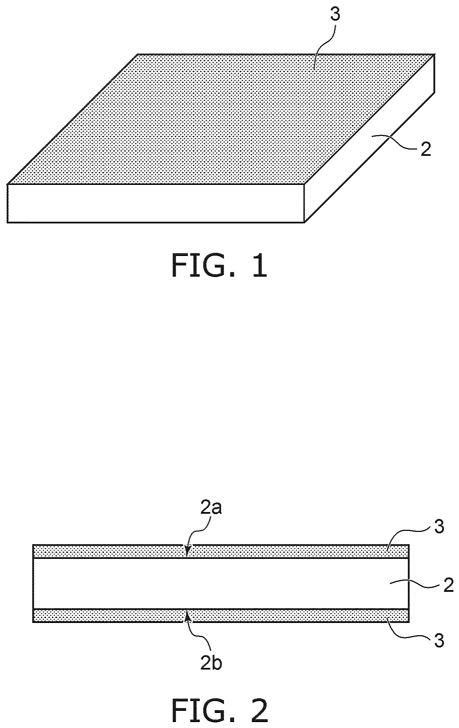

   FIG. 1 is a perspective view showing an example of a ceramic green sheet according to an embodiment.
[FIG. 2]
   FIG. 2 is a cross-sectional view showing an example of the ceramic green sheet according to the embodiment.
[FIG. 3]

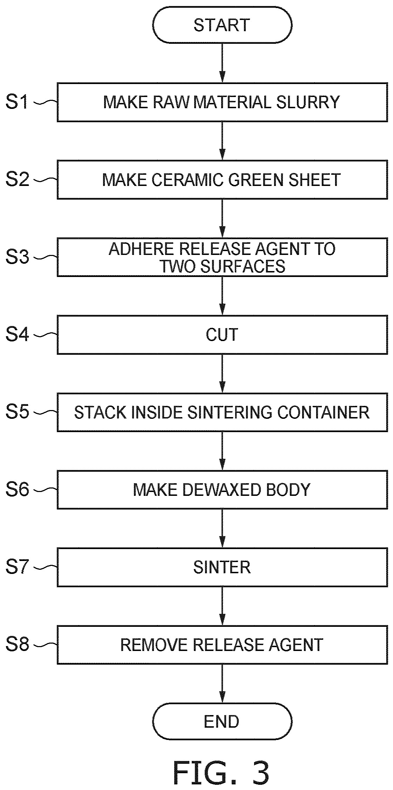

   FIG. 3 is a flowchart showing a method for producing a ceramic substrate according to an embodiment.
[FIG. 4]

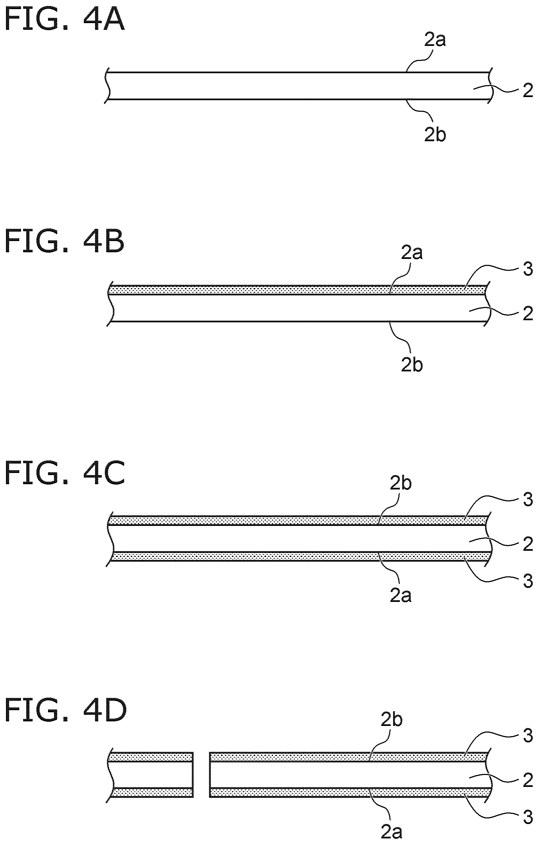

   FIG. 4 is a cross-sectional view showing an example of the production process of the ceramic substrate according to the embodiment.
[FIG. 5]

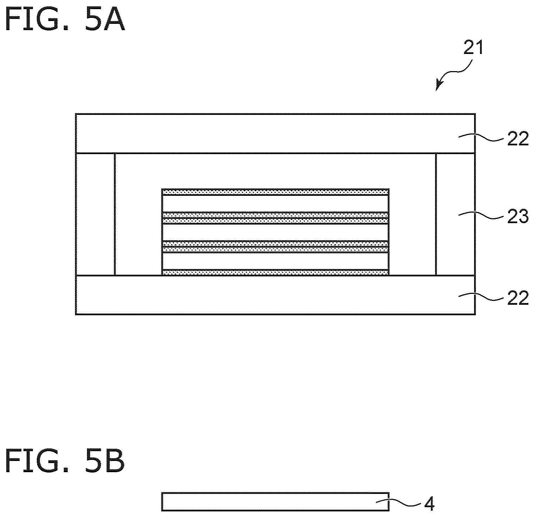

   FIG. 5 is a cross-sectional view showing an example of a production process of the ceramic substrate according to the embodiment.

### [Description of Embodiments]

A method for producing a ceramic substrate according to an embodiment includes an adhesion process and a sintering process. The adhesion process includes adhering a release agent to two surfaces of a ceramic green sheet having a first surface and a second surface. The sintering process includes overlaying and sintering multiple ceramic green sheets to which the release agent is adhered. In the ceramic green sheet after the adhesion process, an adhesion ratio of the release agent on the first surface and an adhesion ratio of the release agent on the second surface each are not less than 5% and not more than 30%. A difference between the adhesion ratio of the release agent on the first surface and the adhesion ratio of the release agent on the second surface is not more than 20%.

A ceramic sintered body such as a ceramic substrate or the like is produced by sintering a compact formed by solidifying a raw material into a prescribed shape. A ceramic green sheet is a compact before sintering, and is made to produce a thin ceramic sintered body such as a ceramic substrate, etc. The ceramic green sheet is made of a ceramic raw material powder, a sintering aid powder, and an organic material. The ceramic raw material powder is the main component of the ceramic substrate. The sintering aid powder is added to sinter the ceramic raw material. The organic material is a resin or the like, and is used to form the powders into a sheet form. A ceramic green sheet is produced by mixing the powders and the organic material in a solvent, forming the mixture into a sheet form, and drying the compact. Because the ceramic green sheet is soft, the ceramic green sheet can be easily cut with a blade such as a cutter, etc., but its lack of strength causes it to be easily damaged when tension or other forces are applied.

The ceramic substrate that is produced is favorably one of an aluminum oxide substrate, an aluminum nitride substrate, or a silicon nitride substrate. An Alusil substrate is an example of one type of aluminum oxide substrate. Alusil is a sintered body with 20 to 80 wt% aluminum oxide and a remainder of zirconium oxide. The three-point bending strength of an aluminum nitride substrate or an aluminum oxide substrate is about 300 to 450 MPa. The strength of an Alusil substrate is about 550 MPa. The three-point bending strength of a silicon nitride substrate is not less than 600 MPa, and can be further increased to not less than 700 MPa. The thermal conductivity of a silicon nitride substrate is not less than 50 W/(m·K), and can be further increased to not less than 80 W/(m·K). In particular, in recent years, there is also a silicon nitride substrate having both high strength and high thermal conductivity. Due to its high strength, the silicon nitride substrate can be made thinner, and its heat dissipation can be further increased.

It is favorable for the thickness of the ceramic green sheet according to the embodiment to be not more than 1.0 mm. The strength is increased when the ceramic green sheet is thick. When, however, the release agent is adhered to a thick ceramic green sheet and dried, cracks easily occur in the surface due to bending forces. When the release agent is coated onto two surfaces of the ceramic green sheet before cutting, it is common to bend the ceramic green sheet during the operation. Therefore, cracks occur easily in thick ceramic green sheets. The thickness of the ceramic green sheet is more favorably not more than 0.8 mm, and even more favorably not more than 0.6 mm.

To obtain multiple ceramic substrates by overlaying and sintering the ceramic green sheet, it is favorable for the release agent adhered to the ceramic green sheet to be a substance that is stable even at high temperatures when sintering and does not react easily with the ceramic substrate. Boron nitride (BN) is an example of a typical release agent adhered to the ceramic green sheet. Boron nitride can be adhered by dispersing a boron nitride powder in water or an organic solvent.

FIG. 1 is a perspective view showing an example of a ceramic green sheet according to an embodiment. As shown in FIG. 1, the release agent 3 is adhered to surfaces of the ceramic green sheet 2. FIG. 2 is a cross-sectional view showing an example of the ceramic green sheet according to the embodiment. The ceramic green sheet 2 has a first surface 2a and a second surface 2b. The second surface 2b is the surface at the side opposite to the first surface 2a. As shown in FIG. 2, the release agent 3 is adhered to each of the first and second surfaces 2a and 2b.

According to the embodiment, the adhesion ratio of the release agent 3 to the first surface 2a and the adhesion ratio of the release agent 3 to the second surface 2b each are not less than 5% and not more than 30%. "Adhesion ratio" refers to the percentage of the area to which the release agent is adhered per unit area. In FIG. 2, the release agent 3 is depicted as a layer to explain the concept, but actually, there are more portions to which the release agent is not adhered than portions to which the release agent is adhered.

The adhesion ratio is measured by the following method. First, a threshold for measuring the adhesion ratio is set. A photograph of the release agent is obtained by imaging the release agent before the release agent is dispersed in the liquid. Then, a photograph of the ceramic green sheet is obtained by imaging the ceramic green sheet before the release agent is adhered. The conditions when imaging the release agent and the conditions when imaging the ceramic green sheet are set to be the same. For example, imaging conditions such as the illuminance of the light, the orientation of the light, the orientation of the camera, the distance between the light source and the imaging subject (the release agent or the ceramic green sheet), the distance between the camera and the imaging subject, the setting of the camera, etc., are set to be completely the same between the imaging of the release agent and the imaging of the ceramic green sheet. Then, the pixel values of the region in which the release agent is visible are referenced in the photograph of the release agent. The pixel values of the region in which the ceramic green sheet is visible are referenced in the photograph of the ceramic green sheet. The pixel values may differ from normal due to shadows or noise at the outer edge vicinity of the imaging subject, and so it is favorable to refer to the pixel values of a region distant to the outer edge. Also, it is favorable to average the pixel values of multiple pixels in the region distant to the outer edge. After obtaining the pixel values of the imaging subjects, an intermediate value between the pixel value of the release agent and the pixel value of the ceramic green sheet is calculated. The intermediate value is used as a threshold when calculating the adhesion ratio.

After the threshold is set, the adhesion ratio of the ceramic green sheet to which the release agent is adhered is measured. First, the ceramic green sheet to which the release agent is adhered is imaged. The imaging conditions of the ceramic green sheet at this time are set to be the same as the imaging conditions of the release agent and the imaging conditions of the ceramic green sheet when setting the threshold. Then, the photograph of the ceramic green sheet is binarized. The intermediate value that was calculated beforehand is used as the threshold for the binarization. By binarization, the pixels having pixel values not more than the threshold are illustrated in black, and the pixels having pixel values greater than the threshold are illustrated in white. General-purpose image processing software (e.g., Image-J) can be used for the binarization. The percentage of the white regions in the region in which the ceramic green sheet is visible is used as the adhesion ratio.

For example, when boron nitride is used as a release agent, pellets of solidified boron nitride powder are prepared beforehand. Boron nitride powder is white and glossy. A ceramic green sheet made of silicon nitride is light gray, and appears darker than boron nitride powder. The pixel values of the release agent are obtained by imaging a pellet. The color of the boron nitride of the pellet and the color of the boron nitride of the powder are substantially the same. Therefore, the boron nitride may be imaged in powder form after pulverizing the pellets. When the liquid in which the boron nitride is dispersed is adhered to the ceramic green sheet, the regions to which the boron nitride is adhered appear brighter and glossier. Accordingly, the pixel values of the regions to which the boron nitride is adhered are greater than the pixel values of the regions to which the boron nitride is not adhered.

The adhesion ratio may be measured before cutting the ceramic green sheet, or may be measured after cutting the ceramic green sheet. When the adhesion ratio is measured before cutting, the entire region to be cut out as one ceramic green sheet is imaged, and the adhesion ratio is calculated. When the adhesion ratio is measured after cutting, the entirety of one ceramic green sheet used to produce one ceramic substrate is imaged, and the adhesion ratio is calculated.

When the release agent is adhered to two surfaces of the ceramic green sheet 2 in the method for producing the ceramic substrate according to the embodiment, the adhesion ratio on the first surface 2a and the adhesion ratio on the second surface 2b each are not less than 5% and not more than 30%. If the adhesion ratio of the release agent is less than 5%, the regions to which the releasability is adhered are too few, and it takes time and effort to separate the sintered ceramic substrates from each other. The ceramic substrates may adhere to each other and cannot be separated, which may result in defective parts. It is therefore favorable for the adhesion ratio of the release agent to be not less than 10%, and more favorably not less than 15%. If the adhesion ratio of the release agent is greater than 30%, the ceramic substrates are easily separated from each other, but an uneven adhesion amount occurs easily. Waviness occurs in the ceramic substrate between the locations where the release agent is thickly adhered and the locations where the release agent is thinly adhered, which causes defects. It is therefore favorable for the adhesion ratio of the release agent to be not more than 25%, and more favorably not more than 20%.

The amount of the release agent 3 adhered to the ceramic green sheet 2 also affects the quality of the ceramic substrate. It is therefore favorable to control the adhesion amount of the release agent 3 in the production of the ceramic substrate. Conventionally, after cutting the ceramic green sheet 2, the weight of the ceramic green sheet 2 before adhering the release agent 3 and the weight of the ceramic green sheet 2 after adhering the release agent 3 are measured, and the adhesion amount of the release agent 3 is calculated based on the weight change. However, it is becoming difficult to control by weight as the ceramic green sheet 2 becomes thinner and larger. Also, to suppress the occurrence of defects and increase productivity, it is favorable to adhere the release agent 3 to the ceramic green sheet 2 uniformly in a small amount. For example, if the release agent is adhered to only a limited region of one surface while controlling the adhesion amount, there are cases where the stacked ceramic substrates may adhere to each other when sintering. According to the embodiment of the invention, the adhesion ratios on the two surfaces of the ceramic green sheet 2 each are controlled within the range of not less than 5% and not more than 30%. As a result, the occurrence of waviness of the ceramic substrates can be suppressed while the separation of the ceramic substrates from each other can be easy. The occurrence of defects can be suppressed, and the productivity of the ceramic substrate can be increased.

It is noted that the adhesion ratio being not less than 5% and not more than 30% does not mean that the release agent is adhered to only a region that is not less than 5% and not more than 30% of the surface. Even when the release agent is adhered to a region, the region will be converted to black by the binarization when the amount in the region is sufficiently low. In other words, the adhesion ratio being not less than 5% and not more than 30% means that even if the release agent is adhered to the entire surface, the percentage of regions to which the release agent is relatively thickly adhered is not less than 5% and not more than 30%.

Also, according to the method for producing the ceramic substrate according to the embodiment, when the release agent is adhered to the two surfaces of the ceramic green sheet 2, the difference between the adhesion ratio on the first surface 2a and the adhesion ratio on the second surface 2b is not more than 20%. The release agent is adhered to the ceramic green sheet while dispersed in a solvent. The solvent that adheres to the ceramic green sheet penetrates the ceramic green sheet. If the difference between the adhesion ratio on the first surface 2a and the adhesion ratio on the second surface 2b is large, a difference occurs between the state of the first surface and the state of the second surface due to the difference between the release agent amounts, the difference between the penetrated solvents, etc. As a result, a difference occurs between the state of the first surface and the state of the second surface after drying. As a result, warp or waviness occurs in the ceramic substrate after sintering. In particular, the warp or waviness caused by the difference between the state of the first surface and the state of the second surface occurs more easily in the ceramic substrate as the ceramic green sheet becomes thin. It is therefore favorable for the difference between the adhesion ratio on the first surface 2a and the adhesion ratio on the second surface 2b to be not more than 15%, and more favorably not more than 10%.

To be able to easily separate the ceramic substrates from each other after sintering, it is favorable for the release agent to be adhered uniformly to the surface of the ceramic green sheet 2. For example, after adhering the release agent, the first surface 2a is uniformly divided into four areas; and the adhesion ratio of the release agent in each area is measured. The method for measuring the adhesion ratio in each area is similar to the method for measuring the adhesion ratio of the first surface 2a and the adhesion ratio of the second surface 2b. Four measured values of the adhesion ratios are obtained from the four areas of the first surface 2a. It is favorable for the difference between the maximum adhesion ratio and the minimum adhesion ratio of the first surface 2a to be not more than 20%. Similarly, the second surface 2b is uniformly divided into four areas; and the adhesion ratio of the release agent in each area is measured. Four measured values of the adhesion ratios are obtained from the four areas of the second surface 2b. It is favorable for the difference between the maximum adhesion ratio and the minimum adhesion ratio of the second surface 2b to be not more than 20%.

At the first surface 2a or the second surface 2b, the ceramic substrates are more easily separated from each other after sintering as the fluctuation of the adhesion ratio decreases. Also, the waviness of the ceramic substrate can be further reduced as the fluctuation of the adhesion ratio decreases. Therefore, at each of the first and second surfaces 2a and 2b, the difference between the maximum adhesion ratio and the minimum adhesion ratio is more favorably not more than 15%, and most favorably not more than 10%.

FIG. 3 is a flowchart showing a method for producing the ceramic substrate according to the embodiment. FIGS. 4A to 4D, FIG. 5A, and FIG. 5B are cross-sectional views showing an example of the production process of the ceramic substrate according to the embodiment. A favorable example of the method for producing the ceramic substrate according to the embodiment will now be described with reference to these drawings. The specific processes and the like included in the production method are not particularly limited, as long as the production method according to the embodiment includes the aforementioned features related to the adhesion ratio. Here, an example of a method for obtaining the ceramic substrate with a high yield will be described. Also, an example is described in which silicon nitride is used as the ceramic, and boron nitride powder is used as the release agent.

First, a ceramic raw material powder and a sintering aid are prepared. When a silicon nitride substrate is made, the raw material powder is a silicon nitride powder. The sintering aid includes an oxide of a rare-earth element, magnesium, titanium, hafnium, etc. Adding a metal oxide as the sintering aid makes it easier to form a liquid phase component in the sintering process. A mixture is prepared by mixing the silicon nitride powder and the sintering aid powder in a prescribed percentage and by further adding an organic binder. The mixture is degassed to make a raw material slurry (step S1). Degassing is processing that removes bubbles from the raw material solution by stirring the raw material solution in a vacuum. The bubbles inside the sintered body also can be reduced by reducing the bubbles inside the raw material solution. By degassing, a slurry with a higher viscosity can be formed.

As shown in FIG. 4A, the raw material slurry is formed into the ceramic green sheet 2 made of silicon nitride (step S2). It is favorable to use a doctor blade technique in the sheet forming. The doctor blade technique can produce large, thin green sheets, which improves suitability for mass production.

Boron nitride powder is prepared as the release agent raw material separately from the formation of the green sheet. The boron nitride powder and a binder are dispersed in water to make a boron nitride slurry. As shown in FIG. 4B, the release agent 3 is adhered to each of the first and second surfaces 2a and 2b of the ceramic green sheet 2 (step S3). More specifically, as shown in FIG. 4B, the release agent (boron nitride slurry) 3 is sprayed toward the first surface 2a by a spray gun with the first surface 2a facing upward. The first surface 2a to which the release agent 3 is adhered is dried by directing warm air or the like onto the first surface 2a. Subsequently, the ceramic green sheet 2 is vertically inverted. As shown in FIG. 4C, the release agent 3 is sprayed by a spray gun or the like toward the second surface 2b with the second surface 2b facing upward. The second surface 2b to which the release agent 3 is adhered is dried.

As shown in FIG. 4D, the ceramic green sheet to which the release agent 3 is adhered is cut to a prescribed size with a cutter, etc. (step S4).

As shown in FIG. 5A, the cut ceramic green sheets 2 are stacked inside a sintering container 21 (step S5). The sintering container 21 is made from boron nitride, etc., and includes, for example, a setter 22 and a setter 23. The setter 22 is arranged along a horizontal direction; and the setter 23 is arranged along a vertical direction. The ceramic green sheets 2 are arranged in a space surrounded with multiple setters 22 and multiple setters 23.

Dewaxed bodies are made by heating the stacked ceramic green sheets at a temperature of not more than 1,000 °C (step S6). It is favorable for the atmosphere of the dewaxing process to be an inert atmosphere such as nitrogen gas, argon gas, etc. An oxygen-containing atmosphere in which an inert atmosphere contains oxygen may be used.

The dewaxed bodies are sintered at a temperature of not less than 1,600 °C and not more than 2,000 °C (step S7). It is favorable for the interior of the sintering container to be a pressurized atmosphere. Dewaxing and sintering may be performed continuously inside the same sintering container. The stacked sintered bodies are separated from each other; and the release agent is removed by honing, etc. (step S8). As a result, as shown in FIG. 5B, a ceramic substrate 4 is made. Subsequently, surface processing such as polishing or the like of the surface of the ceramic substrate 4 may be performed as necessary. When the ceramic substrate 4 is to be used as a circuit board, a process of bonding metal plates or the like to the ceramic substrate 4 also may be performed.

According to the production method described above, it is favorable to adhere the release agent on the second surface 2b within 30 minutes after the release agent is adhered to the first surface 2a of the ceramic green sheet 2. It is common to use the release agent dispersed in a solvent. If the release agent is adhered and dried on only one surface of the ceramic green sheet 2, and then the ceramic green sheet 2 is left for a while, warp occurs easily in the ceramic green sheet 2 due to tension. If the warp of the ceramic green sheet 2 is large, misalignment occurs easily when the ceramic green sheets 2 are overlaid and placed inside the sintering container. Due to this misalignment, the ceramic substrate 4 deforms during sintering. To suppress the warp of the ceramic green sheet 2, it is desirable to adhere the release agent on the second surface 2b immediately after the release agent is adhered to the first surface 2a. By adhering the release agent on the second surface 2b within 30 minutes after the release agent is adhered to the first surface 2a, the warp of the ceramic green sheet 2 can be suppressed. As a result, deformation of the ceramic substrate that is made can be suppressed. It is more favorable for the time from adhering the release agent on the first surface 2a until the release agent is adhered to the second surface 2b to be within 20 minutes, and even more favorably within 10 minutes.

As long as the adhesion ratios of the first and second surfaces 2a and 2b are not less than 5% and not more than 30%, and the adhesion ratio difference between the first surface 2a and the second surface 2b is not more than 20%, the relationship between the adhesion ratio of the release agent 3 to the first surface 2a and the adhesion ratio of the release agent 3 to the second surface 2b can be set arbitrarily. Favorably, the adhesion ratio of the release agent 3 to the first surface 2a is greater than the adhesion ratio of the release agent 3 to the second surface 2b. As described above, the release agent of the first surface 2a is dried after the release agent is adhered to the first surface 2a. Subsequently, the release agent is adhered to the second surface 2b; and the release agent of the second surface 2b is dried. In other words, the process of drying the release agent adhered to the first surface 2a is performed twice. Therefore, even when the adhesion ratio of the release agent 3 to the first surface 2a is high compared to that of the second surface 2b, the release agent 3 of the first surface 2a can be dried sufficiently. Also, the time necessary to dry the release agent 3 can be reduced by making the release agent 3 adhered to the second surface 2b thin. As a result, the time necessary to process the ceramic green sheet 2 can be reduced, and the production efficiency of the ceramic green sheet 2 can be increased.

For example, after the ceramic green sheet 2 is cut, the multiple ceramic green sheets 2 are stacked and sintered. At this time, the multiple ceramic green sheets 2 are stacked so that the first surface 2a to which a relatively thick release agent is adhered and the second surface 2b to which a relatively thin release agent is adhered contact each other. As a result, the ceramic green sheets 2 can be more easily separated from each other after sintering.

Also, it is favorable to cut the ceramic green sheet 2 after the release agent 3 is adhered to the first surface 2a and the second surface 2b as shown in FIG. 4D. When the ceramic green sheet 2 is cut with a cutter or the like, chips and the like are generated when cutting. If the release agent 3 is adhered after the ceramic green sheet 2 is cut, the surface of the ceramic green sheet 2 to which chips are attached is then covered with the release agent 3. If the ceramic green sheet 2 is sintered in this state, the chips stick to the surface of the ceramic substrate 4, and it is difficult to remove the chips. As a result, foreign matter defects of the ceramic substrate 4 easily occur. When the ceramic green sheet 2 is cut after the release agent 3 is adhered, the chips fall upon the release agent 3. In other words, the chips do not directly contact the surface of the ceramic green sheet 2. When the release agent at the surfaces of the ceramic substrate 4 is removed after sintering, the chips also are easily removed. Therefore, the occurrence of foreign matter defects of the ceramic substrate 4 can be suppressed.

To adhere the release agent, a roller, a brush, etc., may be used instead of the spray gun described above. However, spraying with a spray gun is most favorable from the perspective of ease of controlling the adhesion amount, uniformity of the adhesion amount, etc. For example, the spray gun reciprocates horizontally in a perpendicular direction with respect to the conveyance direction of the ceramic green sheet 2. By spraying the release agent while moving back and forth, the release agent can be more uniformly adhered to the ceramic green sheet 2.

The adhesion amount to the first surface 2a, the uniformity of the adhesion amount to the first surface 2a, the adhesion amount to the second surface 2b, the uniformity of the adhesion amount to the second surface 2b, etc., can be adjusted by controlling the reciprocating speed of the spray gun. As an example, a ceramic green sheet 2 with a width of 1,000 mm is conveyed at a conveyance speed of 1 cm/s. In such a case, the release agent is sprayed while moving the spray gun back and forth at a speed of not less than 10 cm/s and not more than 20 cm/s. The pressure of the spray gun is set to be not less than 0.1 MPa and not more than 0.5 MPa.

### Examples

### (Examples 1 to 13 and Comparative Examples 1 to 11)

Two types of ceramic raw material powders, i.e., silicon nitride powder and aluminum nitride powder, were prepared. Magnesium oxide, hafnium oxide, and titanium oxide were added to the silicon nitride powder as sintering aids. Subsequently, the raw material powder that included silicon nitride powder was made into a slurry by mixing with an acrylic resin and toluene. Yttrium oxide was added to the aluminum nitride powder as a sintering aid. Subsequently, the raw material powder that included the aluminum nitride powder was made into a slurry by mixing with a polyvinyl alcohol resin and toluene.

The slurry that was made was dried at 100 °C, and then green sheets having the thicknesses of Table 1 were formed. In Table 1, the green sheets that included silicon nitride are listed as Si₃N₄. The green sheets that included aluminum nitride are listed as AIN. Green sheets of silicon nitride were made for Examples 1 to 11. Green sheets of aluminum nitride were made for Examples 12 and 13.

**[Table 1]**

| | Green sheet | Sheet thickness (mm) | Timing | Processing surface | Interval (min) |
|---|---|---|---|---|---|
| Example 1 | Si₃N₄ | 0.4 | Before cut | Two surfaces | 20 |
| Example 2 | Si₃N₄ | 0.4 | Before cut | Two surfaces | 20 |
| Example 3 | Si₃N₄ | 0.4 | Before cut | Two surfaces | 20 |
| Example 4 | Si₃N₄ | 0.4 | Before cut | Two surfaces | 20 |
| Example 5 | Si₃N₄ | 0.4 | Before cut | Two surfaces | 20 |
| Example 6 | Si₃N₄ | 0.4 | Before cut | Two surfaces | 30 |
| Example 7 | Si₃N₄ | 0.4 | Before cut | Two surfaces | 10 |
| Example 8 | Si₃N₄ | 0.4 | Before cut | Two surfaces | 5 |
| Example 9 | Si₃N₄ | 0.8 | Before cut | Two surfaces | 20 |
| Example 10 | Si₃N₄ | 0.8 | Before cut | Two surfaces | 20 |
| Example 11 | Si₃N₄ | 0.8 | Before cut | Two surfaces | 30 |
| Example 12 | AlN | 0.5 | Before cut | Two surfaces | 20 |
| Example 13 | AlN | 1.0 | Before cut | Two surfaces | 5 |
| Comparative Example 1 | Si₃N₄ | 0.4 | Before cut | Two surfaces | 20 |
| Comparative Example 2 | Si₃N₄ | 0.4 | Before cut | Two surfaces | 20 |
| Comparative Example 3 | Si₃N₄ | 0.4 | Before cut | Two surfaces | 20 |
| Comparative Example 4 | Si₃N₄ | 0.4 | Before cut | Two surfaces | 20 |
| Comparative Example 5 | Si₃N₄ | 0.4 | Before cut | Two surfaces | 35 |
| Comparative Example 6 | Si₃N₄ | 0.4 | After cut | Two surfaces | 20 |
| Comparative Example 7 | Si₃N₄ | 0.4 | After cut | One surface | - |
| Comparative Example 7 | Si₃N₄ | 0.8 | After cut | One surface | - |
| Comparative Example 9 | Si₃N₄ | 0.8 | After cut | Two surfaces | 35 |
| Comparative Example 10 | AlN | 0.5 | After cut | Two surfaces | 35 |
| Comparative Example 11 | AlN | 1.0 | After cut | Two surfaces | 35 |

A boron nitride slurry was prepared as the release agent. The boron nitride slurry was made by dispersing a boron nitride powder and cellulose in water.

Then, an adhesion process was performed. For Examples 1 to 13, the release agent was sprayed toward the first surface 2a of the ceramic green sheet 2; and the release agent was adhered to the first surface 2a of the ceramic green sheet 2. The release agent was sprayed from above the ceramic green sheet 2 with the first surface 2a facing upward. A spray gun was used for the spraying. The pressure of the spray gun was set to 0.15 MPa. When spraying the release agent, the spray gun reciprocated horizontally in a perpendicular direction with respect to the conveyance direction of the ceramic green sheet 2. The ceramic green sheet 2 to which the release agent was adhered was dried in ambient air at a temperature of 100 °C.

The ceramic green sheet 2 was vertically inverted, and the release agent was sprayed toward the second surface 2b with the second surface 2b facing upward. The spraying conditions for the second surface 2b were set to be the same as the spraying conditions for the first surface 2a. The ceramic green sheet 2 to which the release agent was adhered was dried in ambient air at a temperature of 100 °C.

Two spray guns were used to adhere the release agent. One spray gun sprayed the release agent toward the first surface 2a. The other spray gun sprayed the release agent toward the second surface 2b. A long ceramic green sheet was continuously fed into an apparatus that adhered the release agent; and the release agent was continuously adhered to the ceramic green sheet 2 by the two spray guns. At this time, the time from adhering the release agent on the first surface 2a until adhering the release agent on the second surface 2b was controlled by adjusting the positions of the two spray guns, the conveyance speed of the ceramic green sheet, etc. In Table 1, this time is listed as "interval". For Example 8, the interval was set to 5 minutes. For Example 7, the interval was set to 10 minutes. In Examples 1 to 5, 9, 10, and 12, the interval was set to 20 minutes. For Examples 6 and 11, the interval was set to 30 minutes.

After adhering the release agent on the first surface 2a and the second surface 2b, a cutting process was performed. The ceramic green sheet was uniformly divided into five pieces in the width direction. Also, the 4,000 mm ceramic green sheet was uniformly divided into twenty pieces in the length direction. Herein, the dimension in the conveyance direction of the ceramic green sheet is referred to as the "length". The dimension of the ceramic green sheet 2 in a direction perpendicular to the conveyance direction is referred to as the "width". The size of one ceramic green sheet after cutting was 200 mm wide×200 mm long. For each Example, one hundred cut ceramic green sheets were obtained.

In Comparative Examples 1 to 11 as well, similarly to the Examples, a boron nitride slurry was adhered to a ceramic green sheet. However, as listed in Table 1, the release agent was adhered before cutting the ceramic green sheet for Comparative Examples 1 to 5, whereas the release agent was adhered after cutting the ceramic green sheet for Comparative Examples 6 to 11. Similarly to the Examples, the size of the ceramic green sheet after cutting was 200 mm wide×200 mm long. Also, the release agent was adhered to the first surface 2a and the second surface 2b (the two surfaces) of ceramic green sheet for Comparative Examples 1 to 6 and 9 to 11, whereas the release agent was adhered to only the first surface 2a (one surface) of the ceramic green sheet for Comparative Examples 7 and 8. The interval was set to 20 minutes for Comparative Examples 1 to 4 and 6. The interval was set to 35 minutes for Comparative Examples 5 and 9 to 11.

After cutting the ceramic green sheet, the first surface 2a (the front surface) and the second surface 2b (the back surface) of the ceramic green sheet to which boron nitride was adhered were imaged. Binarization of the image was performed using Image-J; and the adhesion ratio of boron nitride on the ceramic green sheet was calculated. Also, the difference between the adhesion ratio on the first surface 2a and the adhesion ratio on the second surface 2b were calculated. For each Example and each Comparative Example, one hundred ceramic green sheets were measured, and the average value of the one hundred ceramic green sheets was calculated. The results are shown in Table 2.

**[Table 2]**

| | First surface adhesion ratio(%) | Second surface adhesion ratio(%) | Adhesion ratio difference(%) | Release defect rate(%) | Warp defect rate(%) | Foreign matter defect rate(%) |
|---|---|---|---|---|---|---|
| Example 1 | 18.4 | 10.3 | 8.1 | 0 | 0 | 0 |
| Example 2 | 28.1 | 15.2 | 12.9 | 0 | 0 | 0 |
| Example 3 | 9.1 | 8.7 | 0.4 | 2 | 0 | 0 |
| Example 4 | 25.0 | 8.7 | 16.3 | 0 | 2 | 0 |
| Example 5 | 8.6 | 16.8 | 8.2 | 0 | 1 | 0 |
| Example 6 | 17.1 | 11.5 | 5.6 | 0 | 0 | 0 |
| Example 7 | 18.1 | 9.3 | 8.8 | 0 | 0 | 0 |
| Example 8 | 19.6 | 8.9 | 10.7 | 0 | 0 | 0 |
| Example 9 | 17.7 | 10.9 | 6.8 | 0 | 0 | 0 |
| Example 10 | 27.4 | 10.0 | 17.4 | 0 | 2 | 0 |
| Example 11 | 19.6 | 10.4 | 9.2 | 0 | 0 | 0 |
| Example 12 | 18.2 | 9.8 | 8.4 | 0 | 0 | 0 |
| Example 13 | 19.3 | 9.7 | 9.6 | 0 | 0 | 0 |
| Comparative Example 1 | 4.5 | 4.0 | 0.5 | 12 | 0 | 0 |
| Comparative Example 2 | 32.5 | 34.2 | 1.7 | 0 | 7 | 0 |
| Comparative Example 3 | 32.1 | 3.2 | 28.9 | 0 | 11 | 0 |
| Comparative Example 4 | 2.9 | 33.3 | 30.4 | 0 | 10 | 0 |
| Comparative Example 5 | 36.3 | 20.7 | 15.6 | 2 | 7 | 0 |
| Comparative Example 6 | 35.7 | 17.1 | 18.6 | 0 | 6 | 8 |
| Comparative Example 7 | 17.2 | 0.0 | 17.2 | 14 | 9 | 7 |
| Comparative Example 7 | 30.8 | 0.0 | 30.8 | 2 | 11 | 4 |
| Comparative Example 9 | 35.1 | 10.3 | 24.8 | 0 | 16 | 6 |
| Comparative Example 10 | 41.1 | 11.7 | 29.4 | 0 | 13 | 7 |
| Comparative Example 11 | 38.9 | 7.1 | 31.8 | 0 | 12 | 7 |

For Examples 1 to 11, the adhesion ratio on the first surface 2a (the front surface), the adhesion ratio on the second surface 2b (the back surface), and the difference between the adhesion ratio on the first surface 2a and the adhesion ratio on the second surface 2b each were within favorable ranges. On the other hand, for Comparative Examples 1 to 11, the aforementioned values were outside the favorable ranges.

Then, the ceramic green sheets were placed inside a sintering container made of boron nitride. The ceramic green sheets were placed with the first surface 2a facing upward. A dewaxing process was performed by heating the ceramic green sheets in a nitrogen atmosphere at a temperature of not less than 600 °C and not more than 800 °C.

After the dewaxing process, a sintering process was performed. In the sintering process, the silicon nitride green sheet was sintered by heating in a nitrogen atmosphere at 1,850 °C for 10 hours. The aluminum nitride green sheet was sintered by heating in a nitrogen atmosphere at 1,800 °C for 5 hours.

Ten ceramic green sheets were overlaid and placed inside a sintering container. The dewaxing process and the sintering process were repeated 10 times to process the one hundred ceramic green sheets of each Example and each Comparative Example. As a result, one hundred ceramic substrates were obtained for each Example and for each Comparative Example.

The sintered ceramic substrates were removed from the sintering container; and the releasability was checked. The ceramic substrates were determined to be good when the substrates could be easily released from each other with a weak force. The ceramic substrates were determined to have release defects when there were adhered locations at which the substrates could not be easily released from each other. The defect rates were determined for each Example and each Comparative Example.

The boron nitride was removed by blasting the released ceramic substrates. Subsequently, the ceramic substrate was passed between two mutually-parallel planar plates. The distance between the planar plates was set to 120% of the thickness of the ceramic substrate. The ceramic substrates that could pass between the planar plates were determined to be good. The ceramic substrates that could not be passed between the planar plates were determined to have warp defects. The defect rates were determined for each Example and each Comparative Example.

Also, the surfaces of the ceramic substrates were checked with a magnifying glass for the released ceramic substrates to check whether or not foreign matter such as chips or the like adhered when cutting the ceramic green sheet. The ceramic substrates for which the adhesion of foreign matter could not be confirmed were determined to be good. The ceramic substrates for which the adhesion of foreign matter was confirmed were determined to have foreign matter defects. The defect rates were determined for each Example and each Comparative Example. The release defect rate, the warp defect rate, and the foreign matter defect rate are shown in Table 2.

For Examples 1 to 11, the release defect rate, the warp defect rate, and the foreign matter defect rate were low, and the defect rates were within favorable ranges. This was because the adhesion ratio of the release agent on the first surface 2a, the adhesion ratio of the release agent on the second surface 2b, and the interval of the adhering were controlled to be within favorable ranges, which made it easy to release the ceramic substrates from each other and suppress the occurrence of warp of the ceramic substrates. Also, in Examples 1 to 11, the ceramic green sheet was cut after adhering the release agent to the two surfaces of the ceramic green sheet. As a result, it is considered that the direct adhesion of cutting chips and the like to the surfaces of the green sheets was suppressed, and the occurrence of foreign matter defects was suppressed.

In contrast, in some of Comparative Examples 1 to 11, many release defects occurred in which the ceramic substrates could not be released from each other. It is considered that this was because the releasability of the ceramic substrates degraded because the adhesion ratio on the surfaces of the ceramic green sheets were insufficient.

In many of Comparative Examples 1 to 11, the warp of the ceramic substrate after sintering was large, and there were many warp defects. It is considered that this was because the difference between the adhesion ratio of the release agent on the first surface 2a and the adhesion ratio of the release agent on the second surface 2b were large, or the interval between adhering the release agent was too long. It is considered that a difference occurred between the state of the first surface 2a and the state of the second surface 2b, which caused warp of the ceramic substrate.

In some of Comparative Examples 1 to 11, many foreign matter defects were confirmed at the surfaces of the ceramic substrates. It is considered that cutting chips and the like adhered to the surfaces of the green sheets because the ceramic green sheets were cut before adhering the release agent.

In the example above, the ceramic green sheet is a silicon nitride green sheet or an aluminum nitride green sheet, and the release agent is boron nitride with water as a solvent. However, embodiments of the invention are not limited to this example. For example, applications also are possible when a release agent such as aluminum oxide or the like is adhered to an aluminum oxide or other ceramic green sheet. In such a case, the release agent includes aluminum oxide that is heat-treated at a high temperature and includes no aids. The aluminum oxide that is heat-treated at a high temperature without including any aid components has a different composition from the composition of the aluminum oxide ceramic green sheet, and may function as a release agent.

### Feature 1

A method for producing a ceramic substrate, the method comprising:
an adhesion process of adhering a release agent to two surfaces of a ceramic green sheet, the ceramic green sheet having a first surface and a second surface; and
a sintering process of overlaying and sintering a plurality of the ceramic green sheets to which the release agent is adhered,
in the ceramic green sheet after the adhesion process, an adhesion ratio of the release agent on the first surface and an adhesion ratio of the release agent on the second surface each being not less than 5% and not more than 30%,
a difference between the adhesion ratio of the release agent on the first surface and the adhesion ratio of the release agent on the second surface being not more than 20%.

### Feature 2

The method for producing the ceramic substrate according to Feature 1, wherein
in the adhesion process, the release agent is adhered to the second surface within 30 minutes after the release agent is adhered to the first surface.

### Feature 3

The method for producing the ceramic substrate according to Feature 2, wherein
the adhesion ratio of the release agent on the first surface is greater than the adhesion ratio of the release agent on the second surface.

### Feature 4

The method for producing the ceramic substrate according to any one of Features 1 to 3, wherein
when the first surface and the second surface each are uniformly divided into four areas after the adhesion process, and when adhesion ratios of the release agent in each of the areas are measured, a difference between a maximum of the adhesion ratios and a minimum of the adhesion ratios of the first surface is not more than 20%, and a difference between a maximum of the adhesion ratios and a minimum of the adhesion ratios of the second surface is not more than 20%.

### Feature 5

The method for producing the ceramic substrate according to any one of Features 1 to 4, further comprising:
a cutting process of cutting the ceramic green sheet after the adhesion process,
the sintering process including overlaying the cut ceramic green sheets.

### Feature 6

The method for producing the ceramic substrate according to any one of Features 1 to 5, wherein
the ceramic green sheet includes one of silicon nitride, aluminum nitride, or aluminum oxide.

### Feature 7

The method for producing the ceramic substrate according to any one of Features 1 to 6, wherein
a thickness of the ceramic green sheet is not more than 1.0 mm.

While certain embodiments of the invention have been illustrated, these embodiments have been presented by way of example only, and are not intended to limit the scope of the inventions. These novel embodiments may be embodied in a variety of other forms; and various omissions, substitutions, modifications, etc., can be made without departing from the spirit of the inventions. These embodiments and their modifications are within the scope and spirit of the inventions, and are within the scope of the inventions described in the claims and their equivalents. Furthermore, the embodiments above can be implemented in combination with each other.

### [Reference Numeral List]

2 ceramic green sheet
2a ceramic green sheet first surface
2b ceramic green sheet second surface
3 release agent
4 ceramic substrate

## Claims

1. A method for producing a ceramic substrate, the method comprising:
an adhesion process of adhering a release agent to two surfaces of a ceramic green sheet, the ceramic green sheet having a first surface and a second surface; and
a sintering process of overlaying and sintering a plurality of the ceramic green sheets to which the release agent is adhered,
in the ceramic green sheet after the adhesion process, an adhesion ratio of the release agent on the first surface and an adhesion ratio of the release agent on the second surface each being not less than 5% and not more than 30%,
a difference between the adhesion ratio of the release agent on the first surface and the adhesion ratio of the release agent on the second surface being not more than 20%.

2. The method for producing the ceramic substrate according to claim 1, wherein
in the adhesion process, the release agent is adhered to the second surface within 30 minutes after the release agent is adhered to the first surface.

3. The method for producing the ceramic substrate according to claim 2, wherein
the adhesion ratio of the release agent on the first surface is greater than the adhesion ratio of the release agent on the second surface.

4. The method for producing the ceramic substrate according to claim 1 or claim 2, wherein
when the first surface and the second surface each are uniformly divided into four areas after the adhesion process, and when adhesion ratios of the release agent in each of the areas are measured, a difference between a maximum of the adhesion ratios and a minimum of the adhesion ratios of the first surface is not more than 20%, and a difference between a maximum of the adhesion ratios and a minimum of the adhesion ratios of the second surface is not more than 20%.

5. The method for producing the ceramic substrate according to claim 1 or claim 2, further comprising:
a cutting process of cutting the ceramic green sheet after the adhesion process,
the sintering process including overlaying the cut ceramic green sheets.

6. The method for producing the ceramic substrate according to claim 1 or claim 2, wherein
the ceramic green sheet includes one of silicon nitride, aluminum nitride, or aluminum oxide.

7. The method for producing the ceramic substrate according to claim 1 or claim 2, wherein
a thickness of the ceramic green sheet is not more than 1.0 mm.
